# EUROPEAN PATENT APPLICATION

(11) **EP 4 685 188 A1**
(43) Date of publication of application: **28.01.2026**
(21) Application number: 25787647.4
(22) Date of filing: 02.04.2025
(51) Int. Cl.: C08L 77/00, C08L 71/12, C08L 51/08, C08L 51/06, C08K 5/5313, C08K 3/34, C08K 7/14, C08K 5/523

(54) **THERMOPLASTIC RESIN COMPOSITION, PREPARATION METHOD THEREFOR AND MOLDED ARTICLE COMPRISING SAME**

(30) Priority: 22.04.2024 KR 20240053333
(71) Applicant: LG Chem, Ltd., Seoul 07336 (KR)
(72) Inventor: SEO, In Seok, Seoul 07796 (KR); KIM, Hyuntae, Seoul 07796 (KR); HAM, Hyeseung, Seoul 07796 (KR); PARK, Jae Chan, Seoul 07796 (KR)
(74) Representative: Goddar, Heinz J.
(86) International application number: PCT/KR2025/004398
(87) International publication number: WO 2025/225921

(57) **Abstract**

The present invention relates to a thermoplastic resin composition, a method of preparing the same, and a molded article including the same. More particularly, the present invention relates to a thermoplastic resin composition including 15.5 to 26 % by weight of a polyamide resin (a); 9.5 to 17 % by weight of a poly(arylene ether) resin (b); 2 to 5.5 % by weight of a modified poly(arylene ether) resin (c); 0.5 to 4.5 % by weight of one or more (d) selected from the group consisting of an aromatic vinyl elastomer and an olefin elastomer; 5.5 to 12.5 % by weight of a metal phosphorus flame retardant (e); 6.5 to 20.5 % by weight of a metal silicate (f); 15.5 to 38.5 % by weight of glass fiber (g); and 4.5 to 10 % by weight of a flame retardant (h), a method of preparing the thermoplastic resin composition, and a molded article including the thermoplastic resin composition.

According to the present invention, the present invention has an effect of providing a thermoplastic resin composition having excellent flame retardancy and electrical insulation properties, being capable of ensuring the safety of property and life due to excellent flame delay properties thereof during thermal runaway by forming ceramics and delaying flame propagation in case of high temperature and flame occurrence, and having eco-friendliness, a method of preparing the thermoplastic resin composition, and a molded article including the thermoplastic resin composition.

## Description

### [Technical Field]

### [Cross-Reference to Related Application]

This application claims priority to Korean Patent Application No. 10-2024-0053333, filed on April 22, 2024, in the Korean Intellectual Property Office, the disclosure of which is incorporated herein by reference.

The present invention relates to a thermoplastic resin composition, a method of preparing the same, and a molded article including the same. More particularly, the present invention relates to an environmentally friendly thermoplastic resin composition having excellent flame retardancy and electrical insulation properties and being capable of ensuring the safety of property and life by forming ceramics and delaying flame propagation when an unexpected ultra-high temperature flame and the resulting pressure occur, a method of preparing the thermoplastic resin composition, and a molded article including the thermoplastic resin composition.

### [Background Art]

Thermoplastic resins have excellent impact resistance, wear resistance, cold resistance, chemical resistance, and electrical insulation properties and are widely used in various fields such as household goods, electrical and electronic parts, automobile parts, building materials, and various industrial materials.

Recently, thermoplastic resins applied to automobile parts, especially electric vehicle batteries, require higher safety against fire. Accordingly, the thermoplastic resins are required to have flame retardancy in the event of thermal runaway.

'Thermal runaway', the main cause of electric vehicle battery fires, is a phenomenon in which the temperature rises uncontrollably and an explosion occurs when abnormal stress is applied to a battery cell. When the internal temperature of the battery increases above a certain level due to a short circuit such as overvoltage or over discharge, a fire may occur. However, lithium-ion batteries are highly reactive with water, making it difficult to extinguish a fire with water. In addition, as the use of high-capacity batteries increases to improve driving range, the risk of thermal runaway increases.

Conventionally, when preparing a thermoplastic resin, flame retardancy and flame delay properties are imparted to the thermoplastic resin by using a combination of halogen compounds and antimony compounds. The method of imparting flame retardancy by combining halogen compounds and antimony compounds can secure flame retardancy of grade V-0 or grade 5V according to the UL 94 test. However, according to the above method, the flame delay properties are seriously reduced when a flame of 1200 °C or higher and the resulting pressure are generated. In addition, halogenated hydrogen gas generated during the processing process or environmental hormones released during the combustion process may have fatal adverse effects on the human body.

In addition, flame retardants that do not contain halogen are called non-halogen flame retardants, and the most widely used non-halogen flame retardants are phosphorus flame retardants that contain phosphorus. However, the flame retardancy of phosphorus flame retardants is significantly lower than that of halogen-containing flame retardants. Accordingly, by adding a large amount of flame retardant, flame retardancy of grade V-0 or grade 5V according to the UL 94 test can be obtained, but flame delay properties capable of preventing thermal runaway when an unexpected ultra-high temperature flame and the resulting pressure occur are lacking.

In addition, thermoplastic resins used in electric vehicle battery parts require electrical insulation properties because the parts are exposed to electricity for long periods of time.

Therefore, there is a need to develop a thermoplastic resin composition that has excellent electrical insulation properties and flame retardancy, ensures safety against additional damage due to excellent flame delay properties during thermal runaway, and satisfies the quality required for automobile parts, especially electric vehicle battery parts.

### [Related Art Documents]

### [Patent Documents]

Japanese Patent Application Publication No. hei 2-187456

### [Disclosure]

### [Technical Problem]

Therefore, the present invention has been made in view of the above problems, and it is one object of the present invention to provide an environmentally friendly thermoplastic resin composition having excellent flame retardancy, electrical insulation properties, and flame delay properties and thus being capable of ensuring high safety for property and life by forming ceramics during thermal runaway.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

### [Technical Solution]

I) In accordance with one aspect of the present invention, provided is a thermoplastic resin composition including 15.5 to 26 % by weight of a polyamide resin (a); 9.5 to 17 % by weight of a poly(arylene ether) resin (b); 2 to 5.5 % by weight of a modified poly(arylene ether) resin (c); 0.5 to 4.5 % by weight of one or more (d) selected from the group consisting of an aromatic vinyl elastomer and an olefin elastomer; 5.5 to 12.5 % by weight of a metal phosphorus flame retardant (e); 6.5 to 20.5 % by weight of a metal silicate (f); 15.5 to 38.5 % by weight of glass fiber (g); and 4.5 to 10 % by weight of a flame retardant (h).
II) According to I), the modified poly(arylene ether) resin (c) may include a poly(arylene ether) resin modified with unsaturated carboxylic acid or anhydride thereof.
III) According to I) or II), the aromatic vinyl elastomer may include one or more selected from a styrene-butadiene-styrene (SBS) copolymer, a styrene-ethylene-butylene-styrene (SEBS) copolymer, a styrene-butadiene (SB) copolymer, a styrene-isoprene (SI) copolymer, a styrene-isoprene-styrene (SIS) copolymer, an alpha-methyl styrene-butadiene copolymer, a styrene-ethylene-propylene copolymer, a styrene-ethylene-propylene-styrene (SEPS) copolymer, styrene-ethylene-ethylene-butadiene-styrene (SEEBS), styrene-ethylene-ethylene-propylene-styrene (SEEPS), styrene-isoprene-butadiene (SIBS), and a modified polymer thereof.
IV) According to I) to III), the olefin elastomer may include one or more selected from high-density polyethylene (HDPE), low-density polyethylene (LDPE), polypropylene (PP), an ethylene-propylene copolymer (EPM), an ethylene-propylene-diene copolymer (EPDM), an ethylene-butene copolymer, an ethylene-octene copolymer, and a modified polymer thereof.
V) According to I) to IV), the metal silicate (f) may include Al, Ca, or a mixture thereof.
VI) According to I) to V), the metal silicate (f) may include one or more selected from the group consisting of kaolin, kaolinite, pyrophyllite, mica, feldspar, spodumene, petalite, and wollastonite.
VII) According to I) to VI), the metal silicate (f) may be a magnesium-free silicate.
VIII) According to I) to VII), the glass fiber (g) may have an average particle diameter of 3 to 25 µm and an average length of 1 to 10 mm.
IX) According to I) to VIII), the flame retardant (h) may include one or more selected from the group consisting of a melamine-based flame retardant, a phosphazene-based flame retardant, and a phosphate-based flame retardant.
X) According to I) to IX), when applying a 1200 °C flame formed with oxygen and propane gases to a 150 mm × 150 mm × 3 mm specimen according to torch-and-grit evaluation of UL 2596 and measuring flame endurance time until a hole or drip is formed, the thermoplastic resin composition may have a flame endurance time of 600 seconds or more.
XI) According to I) to X), when a comparative tracking index (CTI) is measured using a 3 mm thick specimen according to IEC 60112, the thermoplastic resin composition may be classified as grade 1 or higher by performance level category (PLC) classification.
XII) In accordance with another aspect of the present invention, provided is a method of preparing a thermoplastic resin composition, the method including kneading and extruding 15.5 to 26 % by weight of a polyamide resin (a), 9.5 to 17 % by weight of a poly(arylene ether) resin (b), 2 to 5.5 % by weight of a modified poly(arylene ether) resin (c), 0.5 to 4.5 % by weight of one or more (d) selected from the group consisting of an aromatic vinyl elastomer and an olefin elastomer, 5.5 to 12.5 % by weight of a metal phosphorus flame retardant (e), 6.5 to 20.5 % by weight of a metal silicate (f), 15.5 to 38.5 % by weight of glass fiber (g), and 4.5 to 10 % by weight of a flame retardant (h), wherein the kneading and extrusion are performed using an extruder with nine or more kneading blocks.
XIII) In accordance with still another aspect of the present invention, provided is a flame retardant composition including a metal phosphorus flame retardant, a metal silicate, glass fiber, and a flame retardant.
XVI) According to XIII), based on a total weight of the flame retardant composition, the flame retardant composition may include 8.5 to 21.3 % by weight of the metal phosphorus flame retardant, 11.5 to 40 % by weight of the metal silicate, 27 to 56 % by weight of the glass fiber, and 6.5 to 17 % by weight of the flame retardant.
XV) In accordance with yet another aspect of the present invention, provided is a molded article including the thermoplastic resin composition according to any one of I) to XI).

### [Advantageous Effects]

According to the present invention, the present invention has an effect of providing a thermoplastic resin composition having a flame retardancy of grade V-0 or higher as evaluated according to the UL 94 test, having excellent electrical insulation properties, being capable of ensuring the safety of property and life even during thermal runaway by blocking flame propagation by forming ceramics when an ultra-high temperature flame of 1200 °C or higher and the resulting pressure occur, and being applicable to automotive parts, especially electric vehicle batteries, due to eco-friendliness thereof, a method of preparing the thermoplastic resin composition, and a molded article including the thermoplastic resin composition.

### [Description of Drawings]

FIG. 1 is a schematic diagram of an extruder having nine or more kneading blocks according to the present invention.
FIG. 2 is a schematic diagram showing the measurement method according to the torch-and-grit evaluation of UL 2596.
FIG. 3 is a photograph of an actual measurement scene according to the torch-and-grit evaluation of UL 2596.
FIG. 4 is a photograph of a specimen after torch-and-grit evaluation according to UL 2596 of a thermoplastic resin composition according to Example 1.
FIG. 5 is a photograph of a specimen after torch-and-grit evaluation according to UL 2596 of a thermoplastic resin composition according to Comparative Example 5. The left side is the front of the specimen, and the right side is the back of the specimen.

### [Best Mode]

Hereinafter, a thermoplastic resin composition of the present invention, a method of preparing the same, and a molded article including the same will be described in detail.

The present inventors confirmed that, when a polyamide resin; a poly(arylene ether) resin; a modified poly(arylene ether) resin; one or more selected from the group consisting of an aromatic vinyl elastomer and an olefin elastomer; a metal phosphorus flame retardant; metal silicate; glass fiber; and a flame retardant were included in predetermined contents, a thermoplastic resin composition having a flame retardancy of grade V-0 or higher as measured according to the UL 94 test, having excellent insulating properties, being capable of ensuring the safety of property and life even during thermal runaway by forming ceramics and delaying flame propagation when an ultra-high temperature flame of 1200 °C or higher and the resulting pressure occur, and having eco-friendliness was provided. Based on these results, the present inventors conducted further studies to complete the present invention.

The thermoplastic resin composition according to the present invention is described in detail as follows.

The thermoplastic resin composition of the present invention includes 15.5 to 26 % by weight of a polyamide resin (a); 9.5 to 17 % by weight of a poly(arylene ether) resin (b); 2 to 5.5 % by weight of a modified poly (arylene ether) resin (c); 0.5 to 4.5 % by weight of one or more (d) selected from the group consisting of an aromatic vinyl elastomer and an olefin elastomer; 5.5 to 12.5 % by weight of a metal phosphorus flame retardant (e); 6.5 to 20.5 % by weight of a metal silicate (f); 15.5 to 38.5 % by weight of glass fiber (g); and 4.5 to 10 % by weight of a flame retardant (h). In this case, flame retardancy and insulating properties may be excellent. In addition, when an ultra-high temperature flame occurs unexpectedly, by forming ceramics and delaying flame propagation, the safety of property and life may be secured, and eco-friendliness may be achieved.

Hereinafter, each component of the thermoplastic resin composition of the present invention will be described in detail.

### (a) Polyamide resin

For example, based on a total weight of components (a) to (h), the polyamide resin (a) may be included in an amount of 15.5 to 26 % by weight, preferably 17 to 25 % by weight, more preferably 18 to 24 % by weight, still more preferably 19 to 23 % by weight, still more preferably 19 to 22 % by weight. Within this range, mechanical properties, electrical insulation properties, and flame retardancy may be excellent. In addition, when thermal runaway occurs, the safety of property and life may be secured due to excellent flame delay properties.

In the present invention, thermal runaway refers to a state in which a temperature change changes the environment in a way that further accelerates the temperature change. That is, thermal runaway may be said to be a process in which the cause of a mechanical process is an increase in temperature, and the energy released as a result of that process increases the temperature, accelerating the process.

For example, the polyamide resin (a) may be a polyamide prepared by polycondensation of lactam or ω-amino acid or polycondensation of two or more types of lactam and ω-amino acid, or a polyamide prepared by polycondensation of a diacid and a diamine, but the present invention is not limited thereto.

Preferably, the polyamide resin (a) may include one or more selected from the group consisting of a copolymer of diamine having 2 to 30 carbon atoms and dicarboxylic acid having 4 to 30 carbon atoms; a lactam polymer; an aminocarboxylic acid polymer; and a copolymer of lactam and aminocarboxylic acid. In this case, mechanical properties and appearance quality may be excellent.

In addition, the polyamide resin may be, for example, homopolyamide, copolyimide, or a mixture thereof.

For example, the polyamide resin (a) may be crystalline, semi-crystalline, or amorphous.

The polymer of a diamine having 2 to 30 carbon atoms and a dicarboxylic acid having 4 to 30 carbon atoms may include preferably one or more polymers selected from the group consisting of polyamides obtained by polymerizing an aliphatic or aromatic diamine, such as ethylenediamine, tetramethylenediamine, hexamethylenediamine, undecamethylenediamine, dodecamethylenediamine, 2,2,4-trimethylhexamethylenediamine, 2,4,4-trimethylhexamethylenediamine, 5-methylnonahexamethylenediamine, metaxylenediamine, paraxylenediamine, 1,3-bisaminomethylcyclohexane, 1,4-bisaminomethylcyclohexane, 1-amino-3-aminomethyl-3,5,5-trimethylcyclohexane, bis(4-aminocyclohexane)methane, bis(4-methyl-4-aminocyclohexyl)methane, 2,2-bis(4-aminocyclohexyl) propane, bis(aminopropyl)piperazine, and aminoethylpiperidine, and an aliphatic or aromatic dicarboxylic acid, such as adipic acid, sebacic acid, azelaic acid, terephthalic acid, 2-chloroterephthalic acid, and 2-methylterephthalic acid.

The lactam polymer may preferably be obtained by ring-opening polymerization of a lactam compound such as caprolactam and laurolactam.

The aminocarboxylic acid polymer may preferably be obtained by polymerizing aminocarboxylic acids such as aminocaproic acid, 11-aminoundecanoic acid, and 12-aminododecanoic acid.

The polyamide resin (a) may preferably include one or more selected from the group consisting of polyamide 6, polyamide 66, polyamide 46, polyamide 56, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/9I, and polyamide 66/12/6I, more preferably one or more selected from the group consisting of polyamide 6, polyamide 56, and polyamide 66. In this case, economic efficiency or processability may be excellent. In addition, the mechanical properties and heat resistance may be improved.

For example, the polyamide resin (a) may have a relative viscosity (RV) of 1.5 to 3.5, preferably 1.7 to 3, more preferably 2.0 to 2.7. In this case, overheating due to friction between the screw of an extruder and the molten composition during extrusion molding may be prevented. In addition, since tension applied to the molten composition is appropriate, extrusion processability may be excellent.

In the present invention, unless otherwise stated, the relative viscosity is measured using a UFIT-UVS instrument at 20 °C using a solution prepared by dissolving 1 g of polyamide in 100 ml of sulfuric acid (96 wt%).

### (b) Poly(arylene ether) resin

For example, based on a total weight of components (a) to (h), the poly(arylene ether) resin (b) may be included in an amount of 9.5 to 17 % by weight, preferably 10 to 16 % by weight, more preferably 10 to 15.5 % by weight, still more preferably 11 to 15.5 % by weight, still more preferably 11.5 to 15.5 % by weight. Within this range, mechanical properties, electrical insulation properties, and flame retardancy may be excellent. In addition, when thermal runaway occurs, the safety of property and life may be secured due to excellent flame delay properties.

For example, the poly(arylene ether) resin may a homopolymer or copolymer including a unit represented by Chemical Formula 1 or 2 below.

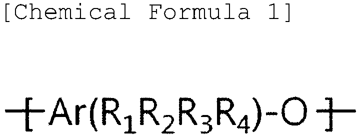

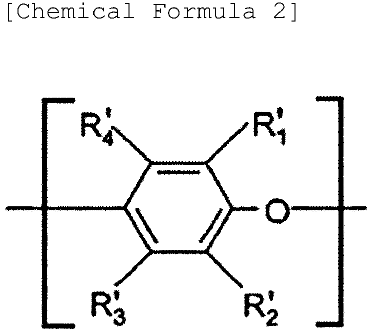

In Chemical Formulas 1 and 2, R₁, R₂, R₃, R₄, R'₁, R'₂, R'₃, and R'₄ may be substituents of an arylene group (Ar) or a phenylene group and may be each independently or simultaneously hydrogen, chlorine, bromine, iodine, alkyl, allyl, phenyl, alkylbenzyl, chloroalkyl, bromoalkyl, cyanoalkyl, cyano, alkoxy, phenoxy, or nitro group, Ar may be an arylene group having 6 to 20 carbon atoms, and the alkoxy may be an alkoxy having 1 to 4 carbon atoms.

Preferably, R₁, R₂, R₃, R₄, R'₁, R'₂, R'₃, and R'₄ may be substituents of an arylene group (Ar) or a phenylene group and may be each independently or simultaneously hydrogen, chlorine, bromine, iodine, methyl, ethyl, propyl, allyl, phenyl, methylbenzyl, chloromethyl, bromomethyl, cyanoethyl, cyano, methoxy, phenoxy, or nitro group, and Ar may be an arylene group having 6 to 20 carbon atoms.

The average degree of polymerization of the poly(arylene ether) resin with respect to the units of Chemical Formula 1 or 2 is not particularly limited as long as the average degree of polymerization follows the definition of the present invention.

For example, a homopolymer of the poly(arylene ether) resin (b) may include one or more selected from the group consisting of poly(2,6-dimethyl-1,4-phenylene) ether, poly(2,6-diethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dimethoxy-1,4-phenylene) ether, poly(2,6-dichloromethyl-1,4-phenylene) ether, poly(2,6-dibromomethyl-1,4-phenylene) ether, poly(2,6-diphenyl-1,4-phenylene) ether, and poly(2,5-dimethyl-1,4-phenylene) ether. In this case, mechanical properties such as impact strength, tensile strength, and flexural strength and processability may be excellent, and thus appearance quality may be improved.

In addition, the copolymer of the poly(arylene ether) resin (b) may include, for example, one or more selected from the group consisting of a copolymer of 2,6-dimethylphenol and 2,3,6-trimethylphenol, a copolymer of 2,6-dimethylphenol and o-cresol, and a copolymer of 2,3,6-trimethylphenol and o-cresol. In this case, mechanical properties, such as impact strength and tensile strength, and processability may be excellent, thereby improving appearance quality.

The poly(arylene ether) resin (b) may be preferably a polyphenylene ether resin.

For example, the poly(arylene ether) resin (b) may have an intrinsic viscosity of 25 to 55 dl/g, preferably 30 to 50 dl/g, more preferably 32 to 45 dl/g. Within this range, the mechanical properties of the composition, such as impact strength and tensile strength, may be maintained at a high level while ensuring fluidity suitable for molding.

When measuring the intrinsic viscosity of the poly(arylene ether) resin (b), unless otherwise specified, a sample to be measured is dissolved in chloroform solvent at a concentration of 0.5 g/dl, and the intrinsic viscosity of the sample is measured at 25 °C using an Ubbelohde viscometer.

For example, based on a total weight of components (a) to (h), a total amount of the polyamide resin (a) and the poly(arylene ether) resin (b) may be 25 to 42 % by weight, preferably 28 to 41 % by weight, more preferably 29 to 40 % by weight, still more preferably 31 to 39 % by weight, still more preferably 31 to 36 % by weight. Within this range, mechanical properties, electrical insulation properties, and flame retardancy may be excellent. In addition, when thermal runaway occurs, the safety of property and life may be secured due to excellent flame delay properties.

For example, the amount of the polyamide resin (a) may be greater than that of the poly(arylene ether) resin (b). The weight ratio (a:b) of the polyamide resin (a) to the poly(arylene ether) resin (b) may be 1:0.4 to 1:0.75, preferably 1:0.45 to 1:0.7, more preferably 1:0.5 to 1:0.7. Within this range, mechanical properties, electrical insulation properties, and flame retardancy may be excellent. In addition, when thermal runaway occurs, the safety of property and life may be secured due to excellent flame delay properties.

### (c) Modified poly(arylene ether) resin

For example, based on a total weight of components (a) to (h), the modified poly(arylene ether) resin (c) may be included in an amount of 2 to 5.5 % by weight, preferably 2.3 to 5 % by weight, more preferably 2.5 to 4.5 % by weight, still more preferably 2.7 to 4.3 % by weight, still more preferably 3 to 4 % by weight. Within this range, compatibility with glass fiber may be increased, and mechanical properties, electrical insulation properties, and flame retardancy may be excellent. In addition, when thermal runaway occurs, the safety of property and life may be secured due to excellent flame delay properties.

For example, the modified poly(arylene ether) resin (c) may include a poly(arylene ether) resin modified with unsaturated carboxylic acid or anhydride thereof. In this case, compatibility with glass fiber may be increased, and mechanical properties, electrical insulation properties, and flame retardancy may be excellent. In addition, when thermal runaway occurs, safety may be secured due to excellent flame delay properties.

For example, the unsaturated carboxylic acid or anhydride thereof may include one or more selected from the group consisting of acrylic acid, methacrylic acid, methyl methacrylic acid, citric acid, malic acid, agaric acid, fumaric acid, maleic acid, itaconic acid, citric acid, aconitic acid, and an anhydride thereof.

For example, the poly(arylene ether) resin modified with unsaturated carboxylic acid or anhydride thereof may be prepared by grafting poly(arylene ether) resin and unsaturated carboxylic acid or anhydride thereof in a molten, solution, or slurry state.

As a specific example, the poly(arylene ether) resin modified with unsaturated carboxylic acid or anhydride thereof may be prepared by mixing a poly(arylene ether) resin and unsaturated carboxylic acid or anhydride thereof, melt-kneading the mixture at 250 to 350 °C for 0.1 to 10 minutes using a kneading device, and performing grafting reaction.

For example, based on 100 parts by weight of the poly(arylene ether) resin used in the graft reaction, the unsaturated carboxylic acid or anhydride thereof may be included in an amount of 0.05 to 2 parts by weight, preferably 0.1 to 1.5 parts by weight, more preferably 0.2 to 1 part by weight. Within this range, by reducing the interfacial tension between poly(arylene ether) and glass fiber, dispersibility may be improved and mechanical strength and physical property balance may be excellent.

The poly(arylene ether) resin modified with unsaturated carboxylic acid or anhydride thereof may be preferably a poly(arylene ether) resin grafted with maleic anhydride. In this case, compatibility with glass fiber may be increased, and mechanical properties, heat resistance, and flame retardancy may be excellent.

For example, the modified poly(arylene ether) resin (c) may have a glass transition temperature (Tg) of 160 to 220 °C, preferably 170 to 210 °C, more preferably 180 to 200 °C. Within this range, mechanical properties and physical property balance may be excellent.

In the present invention, the glass transition temperature (Tg) may be measured at a temperature increase rate of 10 °C/min using a differential scanning calorimeter (DSC, product name: DSC 2920, manufacturer: TA instrument).

For example, the modified poly(arylene ether) resin (c) may have an intrinsic viscosity of 0.1 to 0.9 dl/g, preferably 0.3 to 0.6 dl/g. Within this range, moldability may be excellent.

When measuring the intrinsic viscosity of the modified poly(arylene ether) resin (c), unless otherwise specified, a sample to be measured is dissolved in chloroform solvent at a concentration of 0.5 g/dl, and the intrinsic viscosity of the sample is measured at 25 °C using an Ubbelohde viscometer.

### (d) One or more selected from the group consisting of aromatic vinyl elastomer and olefin elastomer

For example, the thermoplastic resin composition of the present invention may include one or more (d) selected from the group consisting of an aromatic vinyl elastomer and an olefin elastomer, preferably an aromatic vinyl elastomer and an olefin elastomer, more preferably an aromatic vinyl elastomer or an olefin elastomer, still more preferably an olefin elastomer. In this case, mechanical properties such as impact strength and tensile strength may be excellent.

For example, based on a total weight of components (a) to (h), the one or more (d) selected from the group consisting of an aromatic vinyl elastomer and an olefin elastomer may be included in an amount of 0.5 to 4.5 % by weight, preferably 0.6 to 4 % by weight, more preferably 0.7 to 3.5 % by weight, still more preferably 0.8 to 3 % by weight, still more preferably 1 to 2.5 % by weight. Within this range, mechanical properties such as impact strength and tensile strength may be excellent.

For example, the aromatic vinyl elastomer may include one or more selected from a styrene-butadiene-styrene (SBS) copolymer, a styrene-ethylene-butylene-styrene (SEBS) copolymer, a styrene-butadiene (SB) copolymer, a styrene-isoprene (SI) copolymer, a styrene-isoprene-styrene (SIS) copolymer, an alpha-methyl styrene-butadiene copolymer, a styrene-ethylene-propylene copolymer, a styrene-ethylene-propylene-styrene (SEPS) copolymer, styrene-ethylene-ethylene-butadiene-styrene (SEEBS), styrene-ethylene-ethylene-propylene-styrene (SEEPS), styrene-isoprene-butadiene (SIBS), and a modified polymer thereof, preferably one or more selected from the group consisting of a styrene-butadiene-styrene copolymer, a styrene-ethylene-butylene-styrene copolymer, and a maleic anhydride-modified styrene-ethylene-butylene-styrene copolymer. In this case, processability, impact strength, and tensile strength may be excellent.

In the present invention, the term modified polymer means a polymer that has been modified by reaction with a reactive monomer such as an unsaturated carboxylic acid or an anhydride thereof to become an unsaturated carboxylic acid or an anhydride thereof.

As a specific example, the reactive monomer may include one or more selected from the group consisting of citric acid, malic acid, agaric acid, itaconic acid, fumaric acid, (meth)acrylic acid, and anhydrides and (meth)acrylic acid esters thereof.

Based on a total weight thereof, the aromatic vinyl elastomer may include an aromatic vinyl compound in an amount of 20 to 40 % by weight, preferably 25 to 35 % by weight, more preferably 27 to 33 % by weight. Within this range, processability, impact strength, and tensile strength may be excellent.

For example, the aromatic vinyl elastomer may have a weight average molecular weight of 50,000 to 400,000 g/mol, preferably 70,000 to 350,000 g/mol, more preferably 100,000 to 300,000 g/mol. Within this range, processability, impact strength, and tensile strength may be excellent.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the aromatic vinyl elastomer may have a Shore A hardness of 50 to 75, preferably 60 to 72 as measured according to ASTM D2240. Within this range, processability, impact strength, and tensile strength may be excellent.

For example, the aromatic vinyl elastomer may have a tensile strength of 20 MPa or more, preferably 25 MPa or more, more preferably 30 MPa or more, still more preferably 30 to 50 MPa as measured according to ASTM D638. Within this range, processability, impact strength, and tensile strength may be excellent.

For example, the olefin elastomer may be an olefin compound alone or a copolymer obtained by polymerizing the olefin compound. For example, the olefin compound may include one or more selected from ethylene, propylene, isopropylene, butylene, isobutylene, and octene.

As a more specific example, the olefin elastomer may include one or more selected from high-density polyethylene (HDPE), low-density polyethylene (LDPE), polypropylene (PP), an ethylene-propylene copolymer (EPM), an ethylene-propylene-diene copolymer (EPDM), an ethylene-butene copolymer, an ethylene-octene copolymer, and a modified polymer thereof. In terms of ensuring compatibility with polyamide resin, a modified polyolefin may be preferably used. In this case, physical properties such as heat resistance and impact strength may be further improved.

For example, the modified polyolefin may be a reaction product of an unsaturated carboxylic acid, an anhydride thereof or an epoxy compound and a polyolefin polymer. Specifically, the modified polyolefin may include one or more selected from maleic anhydride-modified polyethylene, maleic anhydride-modified polypropylene, and maleic anhydride-modified ethylene-propylene copolymer. In this case, since the compatibility between the olefin-based impact modifier and the polyamide resin increases, physical properties such as heat resistance and impact strength may be further improved.

The weight ratio of the aromatic vinyl elastomer to the olefin elastomer may be preferably 1:9 to 9:1, more preferably 2:8 to 8:2, still more preferably 3:7 to 7:3, still more preferably 4:6 to 6:4. Within this range, mechanical properties such as impact strength and tensile strength may be excellent.

By the synergistic effect of the combination of the modified poly(arylene ether) resin (c) and the one or more (d) selected from the group consisting of an aromatic vinyl elastomer and an olefin elastomer, flame retardancy, insulating properties, and flame delay properties may be excellent, and extrusion performance may be improved.

### (e) Metal phosphorus flame retardant

In the present invention, the metal phosphorus flame retardant is thermally decomposed when an ultra-high temperature flame and the resulting pressure are generated, generating a metal phosphate component. The metal phosphate component acts as a bonding agent that combines metal silicate and glass fiber that has reached Gob temperature, causing physical and chemical structural changes to form ceramics. When thermal runaway of a battery occurs, the formed ceramics delays flame propagation to secure the safety of property and life and achieve environmental friendliness.

In the present invention, the Gob temperature refers to the temperature at which glass fiber melts and turns into a hot lump called a Gob, which can be formed into a desired shape.

In the present invention, the ultra-high temperature flame and pressure means that when a 1200 °C flame formed with oxygen and propane gases is applied to a specimen based on the torch-and-grit evaluation of UL 2596, the pressure generated from the ultra-high temperature flame is transmitted to the specimen together with the flame.

In the present invention, ceramics may preferably include components Al, Si, Ca, and P. In this case, when thermal runaway of a battery occurs, flame delay properties may be excellent.

For example, based on a total weight of components (a) to (h), the metal phosphorus flame retardant (e) may be included in an amount of 5.5 to 12.5 % by weight, preferably 6 to 12 % by weight, more preferably 6.5 to 12 % by weight, still more preferably 7 to 12 % by weight, still more preferably 7 to 11 % by weight. Within this range, flame retardancy and electrical insulation properties may be excellent. In addition, when ultra-high temperature and flame pressure occur, ceramics is formed and flame propagation is delayed. Thus, even when thermal runaway occurs, the safety of property and life may be secured and eco-friendliness may be obtained.

For example, the metal phosphorus flame retardant (e) may be an organic phosphinate metal salt, preferably a dialkylphosphinic acid salt represented by Chemical Formula 3 below, a diphosphinic acid salt represented by Chemical Formula 4 below, or a mixture thereof. In this case, flame retardancy and electrical insulation properties may be excellent. In addition, when ultra-high temperature and flame pressure occur, ceramics is formed and flame propagation is delayed. Thus, even when thermal runaway occurs, the safety of property and life and eco-friendliness may be secured.

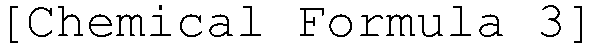

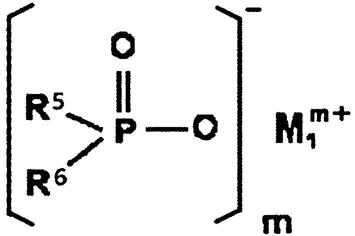

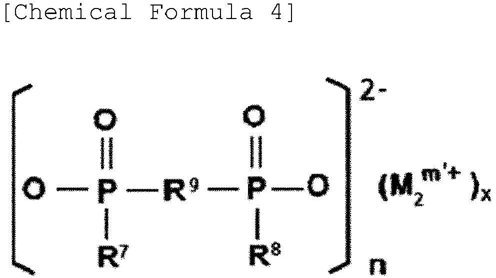

In Chemical Formulas 3 and 4, R⁵, R⁶, R⁷, and R⁸ are each independently linear or branched C₁-C₁₀ alkyl, C₃-C₁₂ cycloalkyl, or H; R⁹ is linear or branched C₁-C₁₀ alkylene, C₆-C₁₀ arylene, C₆-C₂₀ alkylarylene, or C₆-C₂₀ arylalkylene; M₁ is Mg, Ca, Al, Sb, Sn, Ge, Ti, Zn, Fe, Zr, Ce, Bi, Sr, Mn, Li, Na, or K; M₂ is Mg, Ca, Al, Sb, Sn, Ge, Ti, Zn, Fe, Zr, Ce, Bi, Sr, Mn, Li, Na, or K; m is an integer from 1 to 4; m' is an integer from 1 to 4; n is an integer from 1 to 4; and x is an integer from 1 to 4.

In Chemical Formulas 3 and 4, preferably, cycloalkyl may be independently cyclohexyl or cyclohexadimethyl.

Preferably, R⁵, R⁶, R⁷, and R⁸ may each independently be methyl, ethyl, n-propyl, isopropyl, n-butyl, tert-butyl, n-pentyl, or phenyl.

R⁹ may preferably be methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene, or phenylbutylene.

Preferably, M₁ and M₂ may each independently be Mg, Ca, Al, Sb, Sn, Ge, Ti, Zn, Fe, Zr, Ce, Bi, Sr, Mn, Li, Na, or K. More preferably, M₁ and M₂ may each independently be Mg, Ca, Al, Ti, or Zn.

R⁵ and R⁶, and R⁷ and R⁸ may combine with each other to form a ring with the adjacent phosphorus atoms. The ring formed by R⁵ and R⁶ and R⁷ and R⁸ bonding to each other and together with the adjacent phosphorus atoms is a heteroring having the phosphorus atom as a heteroatom constituting the ring. For example, the number of atoms constituting such a ring may be from 4 to 20, preferably from 5 to 16. The heteroring having the phosphorus atom may be a bicyclo-ring or have substituents.

The dialkylphosphinic acid salt represented by Chemical Formula 3 may preferably include one or more selected from the group consisting of calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

The diphosphinic acid salt represented by Chemical Formula 4 may preferably include one or more selected from the group consisting of calcium methylene bis(methylphosphinate), magnesium methylene bis(methylphosphinate), aluminum methylene bis(methylphosphinate), zinc methylene bis(methylphosphinate), calcium 1,4-phenylene bis(methylphosphinate), magnesium 1,4-phenylene bis(methylphosphinate), aluminum 1,4-phenylene bis(methylphosphinate), and zinc 1,4-phenylene bis(methylphosphinate).

More preferably, the metal phosphorus flame retardant (e) may include one or more selected from the group consisting of calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate, still more preferably aluminum diethylphosphinate. In this case, high flame retardancy may be achieved with a small amount of flame retardant while maintaining mechanical properties. In addition, even when thermal runaway occurs, due to excellent flame delay properties, the safety of property and life may be secured, and eco-friendliness may be achieved.

As a specific example, when aluminum diethylphosphinate is used as the metal phosphorus flame retardant (e), organic components are volatilized into phosphoric acid gas under an ultra-high temperature flame, the remaining components change from an amorphous structure to a crystalline structure, and the structure of AlPO₃ changes to the structure of AlPO₄, bonding the metal silicate and glass fiber.

For example, the metal phosphorus flame retardant (e) may have an average particle diameter of 0.1 to 100 µm, preferably 0.5 to 80 µm, more preferably 1 to 60 µm. Within this range, flame retardancy and mechanical properties may be excellent.

In the present invention, the average particle diameter of the metal phosphorus flame retardant means the number average particle diameter obtained from the frequency distribution of particle size and particle number measured using a laser diffraction particle size analyzer, using a dispersion of a metal phosphorus flame retardant dispersed in a medium such as acetone as a measurement sample.

The metal phosphorus flame retardant (e) may have a phosphorus content of preferably 20 to 35 % by weight, more preferably 22 to 30 % by weight. Within this range, flame retardancy and electrical insulation properties may be excellent. In addition, when ultra-high temperature and the resulting pressure occur, ceramics is formed and flame propagation is delayed. Thus, even when thermal runaway occurs, the safety of property and life may be secured.

In the present invention, the phosphorus content means the weight (wt%) of phosphorus converted from the molecular weight of phosphorus contained in the molecular structure of an organic phosphorus flame retardant.

### (f) Metal silicate

In the present invention, the metal silicate is combined with glass fibers in a Gob state by the metal phosphate component generated by the thermal decomposition of the metal phosphorus flame retardant when an ultra-high temperature flame and pressure are generated, causing physical and chemical structural changes to form ceramics. The formed ceramics retard the flame. Thus, even when thermal runaway of a battery occurs, the safety of property and life may be secured.

For example, based on a total weight of components (a) to (h), the metal silicate (f) may be included in an amount of 6.5 to 20.5 % by weight, preferably 7.5 to 19 % by weight, more preferably 8 to 18 % by weight, still more preferably 9 to 18 % by weight, still more preferably 10 to 17 % by weight. Within this range, flame retardancy and electrical insulation properties may be excellent. In addition, ceramics are formed by bonding with glass fiber by the metal phosphorus flame retardant under an ultra-high temperature flame, thereby delaying flame propagation. Thus, even when thermal runaway occurs, the safety of property and life may be secured.

The metal silicate (f) may be defined as a material that forms ceramics by combining the glass fiber in a Gob state and the metal phosphorus flame retardant under an ultra-high temperature flame, i.e., a ceramic-forming metal silicate. Accordingly, talc, which does not form ceramics under an ultra-high temperature flame, does not correspond to metal silicate according to the definition of the present invention.

For example, the metal silicate (f) may include Al, Ca, or a mixture thereof. In this case, flame retardancy and electrical insulation properties may be excellent. In addition, when ultra-high temperature flame and pressure occur, ceramics are formed by bonding with glass fiber, thereby delaying flame propagation. Thus, even when thermal runaway occurs, the safety of property and life may be secured.

For example, the metal silicate (f) may include one or more selected from the group consisting of kaolin, kaolinite, pyrophyllite, mica, feldspar, spodumene, petalite, and wollastonite, preferably one or more selected from the group consisting of kaolin, mica, and wollastonite, more preferably kaolin, mica, or a mixture thereof. In this case, flame retardancy and electrical insulation properties may be excellent. In addition, when ultra-high temperature flame and pressure occur, ceramics are formed by bonding with glass fiber, thereby delaying flame propagation. Thus, even when thermal runaway occurs, the safety may be secured.

For example, the metal silicate (f) may be a magnesium-free silicate. In this case, flame retardancy and electrical insulation properties may be excellent without interference from magnesium. In addition, when ultra-high temperature flame and pressure occur, ceramics are formed by bonding with glass fiber, thereby delaying flame propagation. Thus, even when thermal runaway occurs, the safety may be secured.

In the present invention, based on a total weight of the metal silicate, the magnesium-free silicate may contain magnesium (when not containing magnesium oxide) or magnesium oxide in an amount of 3 % by weight or less, preferably 2 % by weight or less, more preferably less than 2 % by weight, still more preferably 1 % by weight or less, still more preferably less than 1 % by weight, still more preferably 0.01 % by weight or more and less than 1 % by weight. When the magnesium or magnesium oxide content in the metal silicate exceeds the range, ceramics are not properly formed when an ultra-high temperature flame and the resulting pressure are generated. In addition, even when ceramics are formed, the ceramics are instantly broken and do not have the effect of delaying flame propagation.

For example, the metal silicate (f) may have an average particle diameter of 0.1 to 100 µm, preferably 0.1 to 70 µm, more preferably 0.1 to 60 µm. Within this range, compatibility with glass fiber may be improved, and thus mechanical properties, electrical insulation properties, flame retardancy, and flame delay properties may be excellent.

In the present invention, the average particle diameter may be measured by a measuring method commonly used in the technical field to which this invention belongs, such as electron microscope analysis. As a specific example, the average particle diameter may be measured by an X-ray method.

### (g) Glass fiber

In the present invention, the glass fiber changes into a Gob state when an ultra-high temperature flame and pressure are generated, and the glass fiber in the Gob state combines with metal silicate by the metal phosphate component generated by the thermal decomposition of the metal phosphorus flame retardant, causing physical and chemical structural changes to form ceramics. Accordingly, the occurrence of holes or drips due to flame is prevented. Thus, when thermal runaway occurs, safety may be ensured due to the excellent flame delay properties.

For example, based on a total weight of components (a) to (h), the glass fiber (g) may be included in an amount of 15.5 to 38.5 % by weight, preferably 20 to 36 % by weight, more preferably 22 to 34 % by weight, still more preferably 24 to 34 % by weight, still more preferably 25 to 33 % by weight. Within this range, mechanical properties, flame retardancy, and appearance characteristics may be excellent. In addition, when an ultra-high temperature flame and the resulting pressure occur, by forming ceramics and delaying flame propagation, safety may be secured.

The glass fiber (g) may preferably include E-glass fiber. In this case, flame retardancy and electrical insulation properties may be excellent. In addition, when ultra-high temperature flame and pressure occur, ceramics are formed by bonding with metal silicate by the metal phosphorus flame retardant, thereby delaying flame propagation. Thus, even when thermal runaway occurs, the safety may be secured.

In the present invention, E-glass fiber is a glass fiber with excellent electrical properties, and E-glass fiber commonly used in the technical field to which the present invention belongs may be used without particular limitation. E-glass fiber contains SiO₂, Al₂O₃, CaO, and B₂O₃ as upper components.

For example, the glass fiber (g) may include chopped glass fiber. In this case, compatibility may be excellent.

In the present invention, chopped glass fiber commonly used in the technical field to which the present invention belongs may be used without particular limitation.

For example, the glass fiber (g) may have an average particle diameter of 3 to 25 µm, preferably 5 to 20 µm, more preferably 7 to 15 µm. Within this range, the mechanical strength with a polyamide resin may be improved, and the appearance characteristics of a final product may be excellent.

For example, the glass fiber (g) may have an average length of 1 to 10 mm, preferably 2 to 7 mm, more preferably 2 to 5 mm. Within this range, the mechanical strength with a polyamide resin may be improved, and the appearance characteristics of a final product may be excellent.

For example, the glass fiber (g) may have an aspect ratio (L/D), which is the ratio of the average length (L) to the average diameter (D), of 200 to 550, preferably 220 to 450, more preferably 250 to 350, still more preferably 270 to 320. Within this range, due to excellent compatibility with the polyamide resin, the surface appearance may be excellent.

In the present invention, the average particle diameter, average length, and aspect ratio of the glass fiber are measured by microscopic analysis. At this time, the corresponding values of 30 glass fiber strands are calculated and the average values thereof are calculated.

For example, the glass fiber (g) may be surface-treated with a silane compound or a urethane compound. Preferably, the glass fiber (g) may be surface-treated with one or more surface treatment agents selected from the group consisting of an amino silane compound, an epoxy silane compound, and a urethane compound, more preferably an amino silane compound. In this case, dispersibility and surface wettability may be improved by combining with the polyamide resin. As a result, mechanical properties including tensile strength of the resin composition may be improved.

For example, based on 100 % by weight in total of the surface-treated glass fiber (glass fiber + surface treatment agent), the surface treatment agent may be included in an amount of 0.1 to 10 % by weight, preferably 0.1 to 5 % by weight, more preferably 0.1 to 3 % by weight, still more preferably 0.1 to 0.8 % by weight, still more preferably 0.2 to 0.5 % by weight. Within this range, mechanical properties, physical property balance, and the appearance of a final product may be excellent.

As the amino silane compound, amino silane, which is generally used as a coating agent for glass fiber, may be used without particular limitations. For example, the amino silane compound may include one or more selected from the group consisting of gamma-glycidoxypropyl triethoxy silane, gamma-glycidoxypropyl trimethoxy silane, gamma-glycidoxypropyl methyldiethoxy silane, gamma-glycidoxypropyl triethoxy silane, 3-mercaptopropyl trimethoxy silane, vinyltrimethoxysilane, vinyltriethoxy silane, gamma-methacryloxypropyl trimethoxy silane, gamma-methacryloxy propyl triethoxy silane, gamma-aminopropyl trimethoxy silane, gamma-aminopropyl triethoxy silane, 3-isocyanato propyltriethoxy silane, gamma-acetoacetate propyl trimethoxysilane, acetoacetate propyl triethoxy silane, gamma-cyanoacetyl trimethoxy silane, gamma-cyanoacetyl triethoxy silane, and acetoxyaceto trimethoxy silane. In this case, mechanical properties and heat resistance may be excellent, and the surface properties of an injection molded product may be excellent.

As the epoxy silane compound, epoxy silane, which is generally used as a coating agent for glass fiber, may be used without particular limitations. For example, the epoxy silane compound may include one or more selected from the group consisting of 3-glycidyloxypropyltrimethoxysilane, 3-glycidyloxypropyltriethoxysilane, 3-glycidyloxypropyl(dimethoxy)methylsilane, and 2-(3,4-epoxycyclohexyl)ethyltrimethoxysilane. In this case, mechanical properties and heat resistance may be excellent, and the surface properties of an injection molded product may be excellent.

The glass fiber (g) may be appropriately selected and used within the range commonly used in the art as long as the glass fiber follows the definition of the present invention, and the cross-sectional shape such as cylindrical or oval is not particularly limited.

For example, based on a total weight of the thermoplastic resin composition, a total amount of the metal silicate and glass fiber may be 30 to 54 % by weight, preferably 35 to 51 % by weight, more preferably 37 to 48 % by weight, still more preferably 39 to 45 % by weight. Within this range, flame retardancy and electrical insulation properties may be excellent. In addition, when an ultra-high temperature flame and the resulting pressure occur, ceramics may be formed.

### (h) Flame retardant

In the present invention, the flame retardant imparts to the thermoplastic resin composition a high degree of flame retardancy of grade V-0 or higher according to the UL 94 test and excellent electrical insulation properties. In addition, when an ultra-high temperature flame and the resulting pressure occur, the flame retardant undergoes thermal decomposition. During thermal decomposition, almost no toxic gases are generated and no environmental hormones are released, so the flame retardant does not have a harmful effect on the human body or the environment.

For example, based on a total weight of components (a) to (h), the flame retardant (h) may be included in an amount of 4.5 to 10 % by weight, preferably 5 to 9 % by weight, more preferably 5.5 to 8.5 % by weight, still more preferably 5.5 to 8 % by weight, still more preferably 6 to 8 % by weight. Within this range, high flame retardancy of grade V-0 or higher according to UL 94 test may be provided, and mechanical properties and electrical insulation properties may be excellent.

For example, the flame retardant may include one or more selected from the group consisting of a melamine-based flame retardant, a phosphazene-based flame retardant, and a phosphate-based flame retardant, preferably a melamine-based flame retardant. In this case, high flame retardancy of grade V-0 or higher according to the UL 94 test may be provided, mechanical properties and electrical insulation properties may be excellent, and no gases or environmental hormones harmful to humans or the environment are generated.

For example, the melamine-based flame retardant may include one or more selected from the group consisting of melamine cyanurate, triphenyl isocyanurate, melamine phosphate, melamine polyphosphate, melamine pyrophosphate, melamine borate, and melamine sulfate, preferably melamine polyphosphate. In this case, high flame retardancy of grade V-0 or higher according to the UL 94 test may be provided, and mechanical properties and electrical insulation properties may be excellent.

For example, the phosphazene-based flame retardant may be an organic compound having -P=N- bond in molecule. Preferably, the phosphazene-based flame retardant may include one or more selected from the group consisting of cyclic phosphazene compounds, chain phosphazene compounds, and cross-linked phosphazene compounds, more preferably cyclic phosphazene compounds. In this case, flame retardancy and mechanical properties may be excellent.

The cyclic phosphazene compound may preferably be a compound represented by Chemical Formula 5 below.

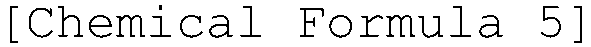

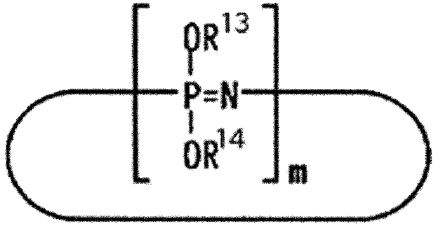

In Chemical Formula 5, m is an integer from 3 to 25, and R¹³ and R¹⁴ are the same or different and represent an aryl group or alkylaryl group.

In Chemical Formula 5, m is preferably an integer between 3 and 5.

More preferably, the cyclic phosphazene compound represented by Chemical Formula 5 may be a cyclic phenoxyphosphazene, wherein R¹³ and R¹⁴ are each independently a phenyl group. Still more preferably, the cyclic phosphazene compound represented by Chemical Formula 5 may include one or more selected from the group consisting of phenoxycyclotriphosphazene, octaphenoxycyclotetraphosphazene, and decaphenoxycyclopentaphosphazene.

The chain phosphazene compound may preferably be a compound represented by Chemical Formula 6 below.

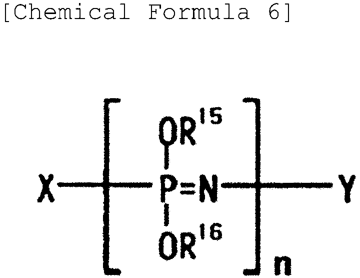

In Chemical Formula 6, n is an integer between 3 and 10,000, X represents an -N=P(OR¹⁵)₃ group or an -N=P(O)OR¹⁵ group, and Y represents a -P(OR¹⁶)₄ group or a -P(O)(OR¹⁶)₂ group. R¹⁵ and R¹⁶ are the same or different and represent an aryl group or alkylaryl group.

In Chemical Formula 6, n is preferably an integer from 3 to 100, more preferably an integer from 3 to 25.

The chain phosphazene compound represented by Chemical Formula 6 may be preferably a chain phenoxphosphazene in which R¹⁵ and R¹⁶ are phenyl groups.

For example, the cross-linked phosphazene compound is obtained by crosslinking one or more phosphazene-based flame retardants selected from the group consisting of a cyclic phosphazene compound and a chain phosphazene compound with a crosslinking group represented by Chemical Formula 7 below.

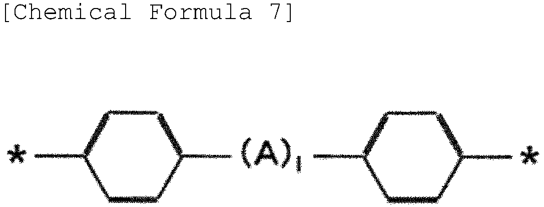

In Chemical Formula 7, A is -C(CH₃)₂-, -SO₂-, -S-, or -O-, I is an integer of 0 or 1, and -* represents a bond.

The cross-linked phosphazene compound may be preferably a cross-linked phenoxyphosphazene compound obtained by cross-linking the cyclic phenoxyphosphazene compound, in which R¹³ and R¹⁴ in Chemical Formula 5 are phenyl groups, by the cross-linking agent represented by Chemical Formula 7, a cross-linked phenoxyphosphazene compound obtained by cross-linking the chain phenoxyphosphazene compound, in which R¹⁵ and R¹⁶ in Chemical Formula 6 are phenyl groups, by the cross-linking agent represented by Chemical Formula 7, or a mixture thereof, more preferably a cross-linked phenoxyphosphazene compound obtained by cross-linking the cyclic phenoxyphosphazene compound by the cross-linking agent represented by Chemical Formula 7.

For example, the phosphate-based flame retardant may include one or more selected from the group consisting of trimethyl phosphate, triethyl phosphate, triphenyl phosphate (TPP), tricresyl phosphate (TCP), trixylenyl phosphate (TXP), resorcinolbis(diphenyl phosphate) (RDP), phenyl diresorcinolphosphate, bisphenol diphenyl phosphate (BDP), cresyl diphenyl phosphate, xylenyl diphenyl phosphate, phenyldi(isopropylphenyl) phosphate, triisophenylphosphate, diphenyl phosphate, resorcinol di phosphate, resorcinol bis(2,6-dixylenyl phosphate), and aromatic polyphosphate.

For example, the thermoplastic resin composition may include a lubricant, an antioxidant or a mixture thereof.

For example, based on a total weight of the thermoplastic resin composition, the lubricant may be included in an amount of 0.01 to 5 % by weight, preferably 0.1 to 3 % by weight, more preferably 0.2 to 1 % by weight, still more preferably 0.2 to 0.5 % by weight. Within this range, mechanical properties may be excellent, and molding processability may be improved.

For example, the lubricant may include one or more selected from the group consisting of a fatty acid ester lubricant, an olefin lubricant, a fatty acid amide lubricant, and a montan lubricant, preferably a fatty acid ester lubricant. In this case, mechanical properties may be excellent, and molding processability may be improved.

For example, the fatty acid ester lubricant may include pentaerythritol fatty acid ester (PETS-AHS).

For example, the olefin lubricant may be polyethylene wax, polypropylene wax, or a mixture thereof.

For example, the fatty acid amide lubricant may include one or more selected from the group consisting of stearamide, behanamide, ethylene bis(stearamide), N,N'-ethylene bis(12-hydroxy stearamide), erucamide, oleamide, and ethylene bis oleamide.

For example, the montan lubricant may be montan wax, montan ester wax, or a mixture thereof. For example, the montan ester wax may include one or more selected from wax obtained by esterifying montan wax with ethylene glycol and montanic acid, wax esterified with glycerin and montanic acid, calcium montanate containing montanic acid ester, and ester-mixed wax based on montan acid.

For example, based on a total weight of the thermoplastic resin composition, the antioxidant may be included in an amount of 0.01 to 5 % by weight, preferably 0.1 to 3 % by weight, more preferably 0.2 to 1 % by weight, still more preferably 0.2 to 0.5 % by weight. Within this range, oxidation due to heat may be prevented during the extrusion process, and mechanical properties and heat resistance may be excellent.

For example, the antioxidant may include one or more selected from the group consisting of a phosphorus antioxidant, a hindered phenolic antioxidant, and a phenolic antioxidant, preferably a phosphorus antioxidant, a hindered phenolic antioxidant, or a mixture thereof. In this case, oxidation due to heat may be prevented during the extrusion process, and mechanical properties and heat resistance may be excellent.

For example, the phosphorus antioxidant may include one or more selected from the group consisting of bis(dialkyl phenyl)pentaerythritol diphosphite ester, phosphite ester, trioctyl phosphite, trilauryl phosphite, tridecyl phosphite, (octyl)diphenyl phosphite, tris(2,4-dit-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl) phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyl dibenz[d,f][1.3.2]-dioxa-phosphepine-6-yl}oxy]-N,N-bis[2-[{2,4,8,10-tetra-t-butyl-dibenz[d,f][1.3.2]-dioxaphosphepine-6-yl}oxy]ethyl]-ethanamine, and 6-[3-(3-t-butyl-4-hydroxy-5-methylphenyl)propoxy]-2,4,8,10-tetra-t-butyl dibenz[d,f][1.3.2]-dioxaphosphepine, more preferably tris(2,4-di-tertiary-butylphenyl) phosphite (IF168).

For example, the hindered phenolic antioxidant may include one or more selected from the group consisting of pentaerythritol tetrakis[3-(3,5-di-t-butyl-4-hydroxyphenyl)propionate] and 1,3,5-trimethyl-2,4,6-tris(3,5-di-t-butyl-4-hydroxybenzyl) benzene, preferably pentaerythritol tetrakis[3-(3,5-di-t-butyl-4-hydroxyphenyl)propionate].

For example, the phenolic antioxidant may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyloxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-di-t-butyl-4-hydroxyphenyl)propionic acid stearyl ester, more preferably octadecyl 3-(3,5-di-tert-butyl-4-hydroxyphenyl)propanoate (IR1076).

The thermoplastic resin composition may further include one or more additives selected from the group consisting of plasticizers, heat stabilizers, anti-dripping agents, light stabilizers, pigments, dyes, inorganic additives (except glass fiber), and carbon fiber.

For example, based on 100 parts by weight of the thermoplastic resin composition, the additives may be included in an amount of 0.01 to 5 parts by weight, preferably 0.01 to 3 parts by weight, more preferably 0.05 to 1 part by weight. Within this range, the required properties may be efficiently implemented without deteriorating the intrinsic properties of the thermoplastic resin composition of the present invention.

### Thermoplastic resin composition

The thermoplastic resin composition may have a flame retardancy of grade V-0 or higher as measured using an injection specimen with dimensions of 127 mm × 12.7 mm × 1.5 mm according to UL 94 test (vertical burning test). In this case, physical property balance and flame retardancy may be excellent.

When applying a 1200 °C flame formed with oxygen and propane gases to a 150 mm × 150 mm × 3 mm specimen according to torch-and-grit evaluation of UL 2596 and measuring flame endurance time until a hole or drip is formed, the thermoplastic resin composition may have a flame endurance time of 600 seconds or more. Within this range, physical property balance may be excellent. In addition, when an ultra-high temperature flame and the resulting pressure occur, by forming ceramics and delaying flame propagation, safety may be secured.

When a comparative tracking index (CTI) is measured using a 3 mm thick specimen according to IEC 60112, the thermoplastic resin composition may be classified as grade 1 or higher, preferably grade 0 or higher by performance level category (PLC) classification. Within this range, physical property balance and electrical insulation properties may be excellent.

### Method of preparing thermoplastic resin composition

The method of preparing a thermoplastic resin composition according to the present invention includes a step of kneading and extruding 15.5 to 26 % by weight of a polyamide resin (a), 9.5 to 17 % by weight of a poly(arylene ether) resin (b), 2 to 5.5 % by weight of a modified poly(arylene ether) resin (c), 0.5 to 4.5 % by weight of one or more (d) selected from the group consisting of an aromatic vinyl elastomer and an olefin elastomer, 5.5 to 12.5 % by weight of a metal phosphorus flame retardant (e), 6.5 to 20.5 % by weight of a metal silicate (f), 15.5 to 38.5 % by weight of glass fiber (g), and 4.5 to 10 % by weight of a flame retardant (h), wherein the kneading and extrusion are performed using an extruder with nine or more kneading blocks. In this case, flame retardancy and insulating properties may be excellent. In addition, the safety of property and life may be ensured by forming ceramics and delaying flame propagation when an unexpected ultra-high temperature flame and the resulting pressure occur, and thus eco-friendliness may be achieved.

For example, the kneading and extrusion may be performed at a barrel temperature of 200 to 350 °C, preferably 220 to 330 °C, more preferably 220 to 310 °C. In this case, the throughput per unit time may be increased, melt-kneading may be sufficiently performed, and thermal decomposition of polyamide resin may be prevented.

For example, the kneading and extrusion may be performed at a screw rotation speed of 100 to 500 rpm, preferably 150 to 400 rpm, more preferably 150 to 300 rpm. Within this range, the throughput per unit time may be increased, and process efficiency may be excellent.

The thermoplastic resin composition obtained through the kneading and extrusion may be provided as a pellet form.

### Flame retardant composition

The flame retardant composition of the present invention includes a metal phosphorus flame retardant, a metal silicate, glass fiber, and a flame retardant. In this case, flame retardancy and insulating properties may be excellent. In addition, when an unexpected ultra-high temperature flame and the resulting pressure occur, by forming ceramics and delaying flame propagation, even when thermal runaway occurs, safety may be secured. In addition, environmental friendliness may be achieved because toxic gases and environmental hormones are not generated during thermal decomposition.

For example, based on a total weight thereof, the flame retardant composition may include 8.5 to 21.3 % by weight of the metal phosphorus flame retardant, 11.5 to 40 % by weight of the metal silicate, 27 to 56 % by weight of the glass fiber, and 6.5 to 17 % by weight of the flame retardant, preferably 9.5 to 21 % by weight of the metal phosphorus flame retardant, 14 to 35 % by weight of the metal silicate, 33 to 55.5 % by weight of the glass fiber, and 7.5 to 16 % by weight of the flame retardant, more preferably 11 to 20.5 % by weight of the metal phosphorus flame retardant, 17 to 30 % by weight of the metal silicate, 40 to 55 % by weight of the glass fiber, and 9 to 14 % by weight of the flame retardant. Within this range, flame retardancy and insulating properties may be excellent. In addition, when an unexpected ultra-high temperature flame and the resulting pressure occur, by forming ceramics and delaying flame propagation, even when thermal runaway occurs, safety may be secured. In addition, environmental friendliness may be achieved because toxic gases and environmental hormones are not generated during thermal decomposition.

In the flame retardant composition, the metal phosphorus flame retardant is thermally decomposed when an ultra-high temperature flame of 1200 °C or higher and the resulting pressure are generated, generating a metal phosphate component. The metal phosphate component combines metal silicate and glass fiber that has reached Gob temperature, causing physical and chemical structural changes to form ceramics. When thermal runaway of a battery occurs, the formed ceramics delays flame propagation to secure the safety of property and life.

The contents of the flame retardant composition include the contents of the thermoplastic resin composition described above, and are omitted here to avoid duplicate description.

### Molded article

A molded article of the present invention includes the thermoplastic resin composition of the present invention. In this case, flame retardancy and electrical insulation properties may be excellent. In addition, when ultra-high temperature flame and the resulting pressure occur, ceramics is formed and flame propagation is delayed. Thus, even when thermal runaway occurs, safety may be secured and eco-friendliness may be achieved.

For example, the molded article may be an electrical/electronic part or an automobile part, specifically, an electric vehicle electrical part or a battery part. In this case, flame retardancy and electrical insulation properties may be excellent. In addition, when ultra-high temperature flame and the resulting pressure occur, ceramics is formed and flame propagation is delayed. Thus, even when thermal runaway occurs, safety may be secured and eco-friendliness may be achieved.

For example, the electric vehicle battery part may be a plastic upper cover, module housing, or busbar of an electric vehicle battery.

A method of manufacturing a molded article according to the present invention preferably includes a step of manufacturing thermoplastic resin composition pellets by kneading and extruding 15.5 to 26 % by weight of a polyamide resin (a), 9.5 to 17 % by weight of a poly(arylene ether) resin (b), 2 to 5.5 % by weight of a modified poly(arylene ether) resin (c), 0.5 to 4.5 % by weight of one or more (d) selected from the group consisting of an aromatic vinyl elastomer and an olefin elastomer, 5.5 to 12.5 % by weight of a metal phosphorus flame retardant (e), 6.5 to 20.5 % by weight of a metal silicate (f), 15.5 to 38.5 % by weight of glass fiber (g), and 4.5 to 10 % by weight of a flame retardant (h), and a step of injecting the pellets to manufacture a molded article. At this time, the kneading and extrusion are performed using an extruder with nine or more kneading blocks. In this case, flame retardancy and insulating properties may be excellent. In addition, when an unexpected ultra-high temperature flame and the resulting pressure occur, by forming ceramics and delaying flame propagation, even when thermal runaway occurs, the safety of property and life may be secured, and eco-friendliness may be achieved.

The injection is not particularly limited by the method and conditions commonly used in the technical field to which the present invention belongs, and can be appropriately selected and applied as needed.

In describing the thermoplastic resin composition of the present invention, the molded article, and the methods thereof, unless specified otherwise, other conditions (for example, the configuration and specifications of an extruder and an injection machine, extrusion and injection conditions, additives, and the like) may be appropriately selected and implemented as needed when the conditions are within the range commonly practiced in the art, without particular limitation.

The present invention will be described with reference to the drawings below.

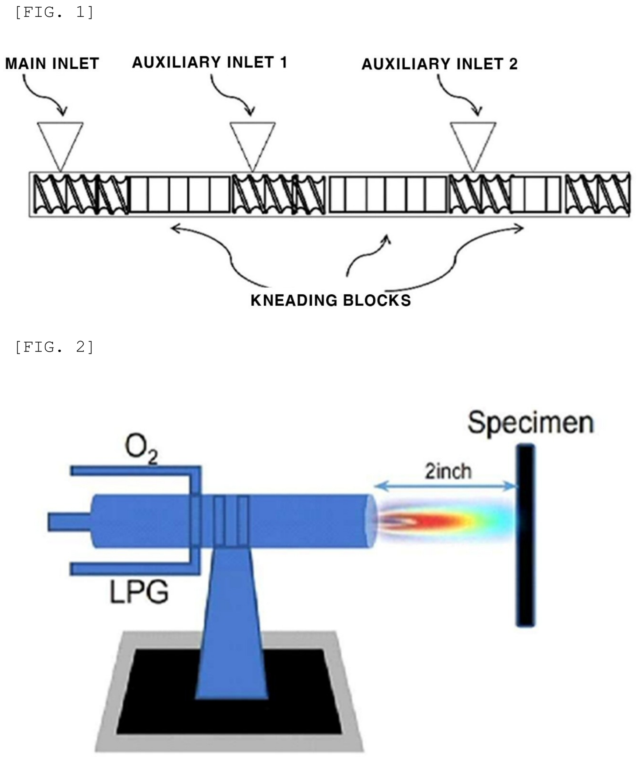

FIG. 1 below is a schematic diagram of an extruder having nine or more kneading blocks used to prepare the thermoplastic resin composition of the present invention.

The type of extruder is not particularly limited, and an extruder commonly used in the art may be appropriately selected and used. For example, a single-screw extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

One or more feeders may be provided. Optionally, two or more feeders may be provided. For example, a main inlet and optionally an auxiliary inlet may be provided. Optionally, more than two auxiliary inlets may be provided.

As a specific example, a polyamide resin, a poly(arylene ether) resin, a modified poly(arylene ether) resin, one or more selected from the group consisting of an aromatic vinyl elastomer, and an olefin elastomer, a metal phosphorus flame retardant, a flame retardant, and additives including a lubricant and an antioxidant may be injected into the main inlet, metal silicate may be injected into the auxiliary inlet 1, and glass fiber may be injected into the auxiliary inlet 2. In this case, the components may be mixed uniformly, and thus physical property balance, electrical insulation properties, and flame retardancy may be excellent. In addition, when an ultra-high temperature flame and the resulting pressure occur, flame delay properties may be excellent during thermal runaway.

As another example, a polyamide resin, a poly(arylene ether) resin, a modified poly(arylene ether) resin, one or more selected from the group consisting of an aromatic vinyl elastomer, and an olefin elastomer and additives may be injected into the main inlet, the metal phosphorus flame retardant and the flame retardant may be injected into the auxiliary inlet 1, and the metal silicate and the glass fiber may be injected into the auxiliary inlet 2. In this case, the components may be mixed uniformly, and thus physical property balance, electrical insulation properties, and flame retardancy may be excellent. In addition, when an ultra-high temperature flame and the resulting pressure occur, flame delay properties may be excellent during thermal runaway.

As another example, a polyamide resin, a poly(arylene ether) resin, a modified poly(arylene ether) resin, one or more selected from the group consisting of an aromatic vinyl elastomer, and an olefin elastomer may be injected into the main inlet, a portion of the metal phosphorus flame retardant, the metal silicate, the glass fiber, the flame retardant, and additives may be injected into the auxiliary inlet 1, and the rest may be injected into the auxiliary inlet 2. In this case, the components may be mixed uniformly, and thus physical property balance, electrical insulation properties, and flame retardancy may be excellent. In addition, when an ultra-high temperature flame and the resulting pressure occur, flame delay properties may be excellent.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross-section or an elliptical cross-section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

For example, the thermoplastic resin composition according to the present invention may be prepared by a method including a step of performing kneading and extrusion using an extruder having 9 or more, preferably 10 or more, more preferably 12 or more, as a preferred example, 9 to 18, as a more preferred example, 10 to 18, as a still more preferred example, 12 to 16 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of the metal silicate and glass fiber and the compatibility of the composition may be further improved, and accordingly, a high-quality thermoplastic resin composition may be provided.

9 or more kneading blocks may be arranged continuously, or may be arranged discontinuously between screws. As a specific example, 3 to 6 kneading blocks may be provided continuously between the main inlet and the auxiliary inlet 1, 3 to 8 kneading blocks may be provided continuously between the auxiliary inlet 1 and the auxiliary inlet 2, and 2 to 5 kneading blocks may be provided between the auxiliary inlet 2 and an outlet (not shown). With this configuration, local heat generation during melt-kneading may be controlled to prevent thermal deformation of raw materials. In addition, excessive cutting of the glass fiber may be prevented, thereby preventing deterioration in mechanical properties, electrical insulation properties, flame retardancy, and flame delay properties during thermal runaway.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

The materials used in Examples and Comparative Examples below are as follows.
* (a) Polyamide resin
   - (a-1) PA6: polyamide 6 resin (relative viscosity: 2.2)
   - (a-2) PA66: polyamide 66 resin (relative viscosity: 2.4)
   - (a-3) PA56: polyamide 56 resin (relative viscosity: 2.5)
* (b) Poly(arylene ether) resin
   - (b-1) PPE: poly (2,6-dimethyl-1,4-phenylene) ether (intrinsic viscosity: 35~42 dl/g)
* (c) Modified poly(arylene ether) resin
   - (c-1) FA-g-PPO: Fumaric acid-grafted polyphenylene ether (g-farm Co., SPO2-ZA)
* (d) Olefin elastomer
   - (d-1) MAH-g-POE: Maleic anhydride-grafted olefin elastomer (DOW Co., FUSABOND MN493D)
* (e) Metal phosphorus flame retardant
   - (e-1) ADP: Aluminum diethyl phosphinate (Clariant Co., OP1230)
* (f) Metal silicate
   - (f-1) Kaolin: Silicate containing Al
   - (f-2) Mica: Silicate containing Al
   - (f-3) Wollastonite: Silicate containing Ca
* (f') Ceramic non-formed metal silicate
   - (f'-1) Talc: Silicate containing magnesium
* (g) Glass fiber
   - (g-1) Glass fiber: Chopped glass fiber having an average particle diameter of 10 to 13 µm and an average length of 3 to 4 mm and being surface-treated with amino silane
* (h) Flame retardant
   - (h-1) RDX: Resorcinol bis(2,6-dixylenyl phosphate)
* (i) Additives
   - Lubricant: EP184 (Hanyang Hwa Seong Co.), 0.25 % by weight
   - Antioxidant: Mixture of IR1010 and AO-412S, 0.25 % by weight

### Examples 1 to 10 and Comparative Examples 1 to 8

A polyamide resin, a poly(arylene ether) resin, a modified poly(arylene ether) resin, an olefin elastomer, a metal phosphorus flame retardant, metal silicate, glass fiber, a flame retardant, and additives were added into a twin-screw extruder (SM Co., T40) having 9 or more mixing blocks in amounts shown in Tables 1 and 2 below, and were melt-kneaded and extruded at a temperature of 220 to 310 °C and a rotation speed of 150 to 300 rpm to obtain pellets. The evaluation specimens were manufactured using an injection molding machine (80 tons, Engel Co.) using the pellets. The manufactured specimens were left at room temperature for more than 48 hours, and the physical properties thereof were measured. The results are shown in Tables 1 and 2 below.

At this time, the twin-screw extruder has two or more inlets. The polyamide resin, the poly(arylene ether) resin, the modified poly(arylene ether) resin, the olefin elastomer, the metal phosphorus flame retardant, the flame retardant, and the additives were injected into the main inlet, the metal silicate was injected into the auxiliary inlet 1, and the glass fiber was injected into the auxiliary inlet 2.

### [Test Examples]

The characteristics of the specimens manufactured in Examples 1 to 10 and Comparative Examples 1 to 8 were measured by the following methods, and the results are shown in Tables 1 and 2 below.

### Measurement methods

* Flame retardancy: Flame retardancy was measured according to the UL 94 V test (vertical burning test) using an injection specimen with the size of 127 mm × 12.7 mm × 1.5 mm.
* Comparative tracking index (CTI): The short-cut voltage was calculated when 50 drops of electrolyte solution were dropped on a 3 mm thick specimen according to IEC 60112. Based on the CTI, a performance level category (PLC) grade was assigned as shown in Table 3.

**[Table 3]**

| Tracking index (volts) | PLC rating |
|---|---|
| 600 ≤ TI | 0 |
| 400 ≤ TI < 600 | 1 |
| 250 ≤ TI < 400 | 2 |
| 175 ≤ TI < 250 | 3 |
| 100 ≤ TI < 175 | 4 |
| 0 ≤ TI < 100 | 5 |

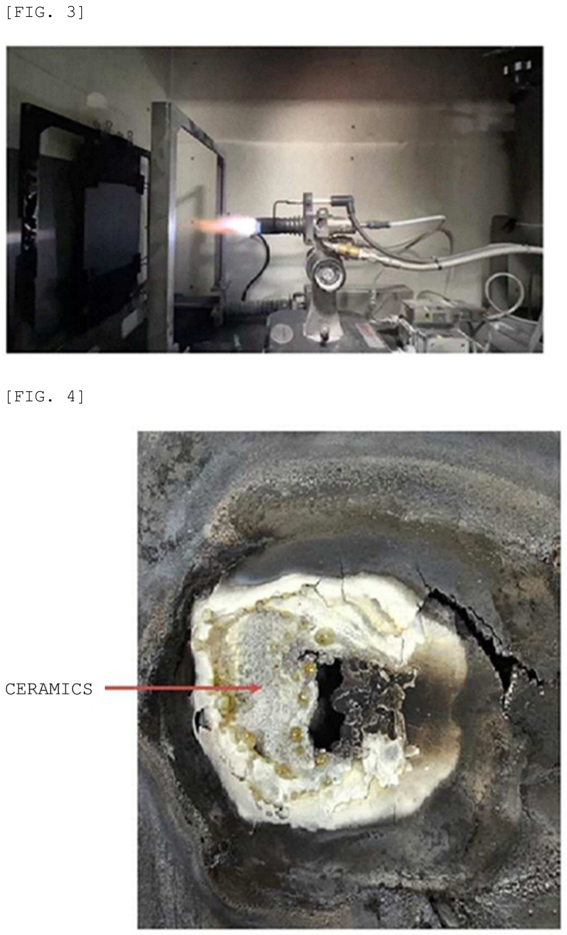

* Flame endurance time (sec): As shown in FIGS. 2 and 3, a 1200 °C flame formed with oxygen and propane gases was applied to a 150 mm × 150 mm × 3 mm specimen based on the torch-and-grit evaluation of UL 2596, and the time until a hole or drip occurred was measured.

**[Table 1]**

| Classifi cation (wt%) | Examples | | | | | | | | | |
|---|---|---|---|---|---|---|---|---|---|---|
| | 1 | 2 | 3 | 4 | 5 | 6 | 7 | 8 | 9 | 10 |
| (a-1) PA6 | 20 | | | | | | | | | |
| (a-2) PA66 | | 20 | | 20 | 20 | 23 | 19.5 | 21 | 22 | 20 |
| (a-3) PA56 | | | 20 | | | | | | | |
| (b-1) PPE | 13.5 | 13.5 | 13.5 | 13.5 | 13.5 | 15.5 | 12 | 13.5 | 11.5 | 13.5 |
| (c-1) FA-g-PPO | 3 | 3 | 3 | 3 | 3 | 3 | 3 | 3 | 3 | 4 |
| (d-1) MAH-g-POE | 2 | 2 | 2 | 2 | 2 | 2 | 2 | 2 | 2 | 1 |
| (e-1) ADP | 10 | 10 | 10 | 10 | 10 | 10 | 10 | 12 | 7 | 10 |
| (f-1) Kaolin | 15 | 15 | 15 | | | 10 | 17 | 15 | 15 | 15 |
| (f-2) Mica | | | | 15 | | | | | | |
| (f-3) Wollasto nite | | | | | 15 | | | | | |
| (f'-1) Talc | | | | | | | | | | |
| (g-1) Glass fiber | 30 | 30 | 30 | 30 | 30 | 30 | 30 | 25 | 33 | 30 |
| (h-1) RDX | 6 | 6 | 6 | 6 | 6 | 6 | 6 | 8 | 6 | 6 |
| (i) Additive s | 0.5 | 0.5 | 0.5 | 0.5 | 0.5 | 0.5 | 0.5 | 0.5 | 0.5 | 0.5 |

| Physical properties | | | | | | | | | | |
|---|---|---|---|---|---|---|---|---|---|---|
| CTI (PLC rating) | 1 | 1 | 1 | 1 | 1 | 1 | 1 | 1 | 1 | 1 |
| Flame retardan cy | V-0 | V-0 | V-0 | V-0 | V-0 | V-0 | V-0 | V-0 | V-0 | V-0 |
| Flame enduranc e time (sec.) | 600 seco nds or more | 600 seco nds or more | 600 seco nds or more | 600 seco nds or more | 600 seco nds or more | 600 seco nds or more | 600 seco nds or more | 600 seco nds or more | 600 seco nds or more | 600 seco nds or more |

**[Table 2]**

| Classification (wt%) | Comparative Examples | | | | | | | |
|---|---|---|---|---|---|---|---|---|
| | 1 | 2 | 3 | 4 | 5 | 6 | 7 | 8 |
| (a-1) PA6 | | | | | | | | |
| (a-2) PA66 | 20 | 20 | 29.1 | 28.1 | 20 | 11.1 | 19.5 | 20.5 |
| (a-3) PA56 | | | | | | | | |
| (b-1) PPE | 13.5 | 13.5 | 19.4 | 18.4 | 13.5 | 7.4 | 13 | 14 |
| (c-1) FA-g-PPO | 3 | 3 | 3 | 3 | 3 | 3 | 8 | 0 |
| (d-1) MAH-g-POE | 2 | 2 | 2 | 2 | 2 | 2 | 0 | 8 |
| (e-1) ADP | 3 | 14 | 10 | 10 | 10 | 10 | 10 | 10 |
| (f-1) Kaolin | 15 | 15 | 25 | 2 | | 15 | 13 | 11 |
| (f-2) Mica | | | | | | | | |
| (f-3) Wollastonite | | | | | | | | |
| (f'-1) Talc | | | | | 15 | | | |
| (g-1) Glass fiber | 30 | 30 | 5 | 30 | 30 | 45 | 30 | 30 |
| (h-1) RDX | 13 | 2 | 6 | 6 | 6 | 6 | 6 | 6 |
| (i) Additives | 0.5 | 0.5 | 0.5 | 0.5 | 0.5 | 0.5 | 0.5 | 0.5 |

| Physical properties | | | | | | | | |
|---|---|---|---|---|---|---|---|---|
| CTI (PLC rating) | 0 | 0 | 0 | 1 | 1 | - | - | - |
| Flame retardancy | V-1 | V-2 | V-0 | V-1 | V-1 | - | - | - |
| Flame endurance time (sec.) | 50 | 600 seconds or more | 100 | 300 | 60 | - | - | - |

| | | | | | | | | |
|---|---|---|---|---|---|---|---|---|
| -: Physical properties cannot be measured because extrusion is not possible | | | | | | | | |

As shown in Tables 1 and 2, compared to Comparative Examples 1 to 8, the thermoplastic resin compositions of the present invention (Examples 1 to 10) exhibited a flame retardancy of grade V-0 or higher, showing excellent flame retardancy. In addition, the thermoplastic resin compositions of the present invention (Examples 1 to 10) exhibited PLC rating of 1 or higher as evaluated based on CTI, showing excellent insulating properties. In addition, when an ultra-high temperature flame of 1200 °C and the resulting pressure occurred, ceramics was formed, and flame propagation was delayed, showing a flame endurance time of 600 seconds or more. In addition, holes were not formed. Accordingly, even when thermal runaway of a battery occurs, the safety of property and life may be secured. In addition, since no toxic gases or environmental hormones are generated, there is no harmful effect on the human body or the environment.

Specifically, Comparative Example 1 containing a small amount of ADP (e-1) and an excess of RDX (h-1) exhibited poor flame retardancy and poor flame endurance time. Comparative Example 2 containing an excess of ADP (e-1) and a small amount of RDX (h-1) exhibited poor flame retardancy.

In addition, Comparative Example 3 containing an excess of kaolin (f-1) and a small amount of glass fiber (g-1) exhibited poor flame endurance time, and Comparative Example 4 containing a small amount of kaolin (f-1) exhibited poor flame retardancy and flame endurance time.

In addition, Comparative Example 5 containing talc (f'-1) exhibited poor flame retardancy. In the case of Comparative Example 5, no ceramics was formed, indicating that flame endurance time was very poor.

In addition, in the case of Comparative Example 6 containing an excess of glass fiber (g-1), Comparative Example 7 in which an excess of the fumaric acid-grafted polyphenylene ether resin (c-1) was included and the maleic anhydride-grafted olefin elastomer (d-1) was not included, and Comparative Example 8 in which the fumaric acid-grafted polyphenylene ether resin (c-1) was not included and an excess of the maleic anhydride-grafted olefin elastomer (d-1) was included, extrusion was difficult.

As shown in FIG. 4 below, when a specimen manufactured using the thermoplastic resin composition according to Example 1 of the present invention is subjected to a flame of 1200 °C formed with oxygen and propane gases according to the torch-and-grit evaluation of UL 2596, ceramics were formed and no holes were formed even after 600 seconds or more. These results show that the flame endurance time was greatly improved.

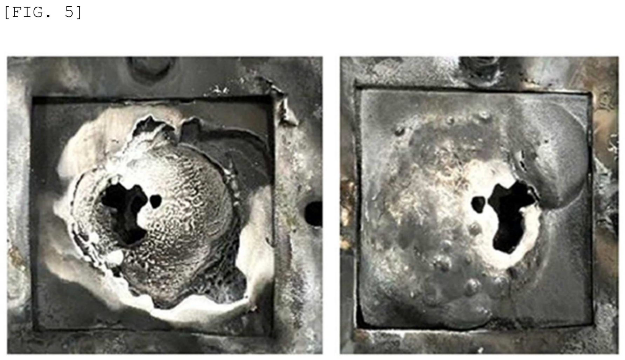

On the other hand, when a specimen manufactured using the thermoplastic resin composition according to Comparative Example 5 was subjected to a 1200 °C flame and the resulting pressure formed by oxygen and propane gases according to the torch-and-grit evaluation of UL 2596, as shown in FIG. 5 below, it was confirmed that holes were created in just 60 seconds without the formation of ceramics.

In conclusion, the thermoplastic resin composition including a polyamide resin; a poly(arylene ether) resin; a modified poly(arylene ether) resin; one or more selected from the group consisting of an aromatic vinyl elastomer and an olefin elastomer; a metal phosphorus flame retardant; metal silicate; glass fiber; and a flame retardant in predetermined contents according to the present invention may have excellent flame retardancy and electrical insulation properties, may ensure the safety of property and life even during thermal runaway by forming ceramics and delaying flame propagation when ultra-high temperature flame and the resulting pressure occur, and may have eco-friendliness.

## Claims

1. A thermoplastic resin composition, comprising:
15.5 to 26 % by weight of a polyamide resin (a);
9.5 to 17 % by weight of a poly(arylene ether) resin (b) ;
2 to 5.5 % by weight of a modified poly(arylene ether) resin (c);
0.5 to 4.5 % by weight of one or more (d) selected from the group consisting of an aromatic vinyl elastomer and an olefin elastomer;
5.5 to 12.5 % by weight of a metal phosphorus flame retardant (e);
6.5 to 20.5 % by weight of a metal silicate (f);
15.5 to 38.5 % by weight of glass fiber (g); and
4.5 to 10 % by weight of a flame retardant (h).

2. The thermoplastic resin composition according to claim 1, wherein the modified poly(arylene ether) resin (c) comprises a poly(arylene ether) resin modified with unsaturated carboxylic acid or anhydride thereof.

3. The thermoplastic resin composition according to claim 1, wherein the aromatic vinyl elastomer comprises one or more selected from a styrene-butadiene-styrene (SBS) copolymer, a styrene-ethylene-butylene-styrene (SEBS) copolymer, a styrene-butadiene (SB) copolymer, a styrene-isoprene (SI) copolymer, a styrene-isoprene-styrene (SIS) copolymer, an alpha-methyl styrene-butadiene copolymer, a styrene-ethylene-propylene copolymer, a styrene-ethylene-propylene-styrene (SEPS) copolymer, styrene-ethylene-ethylene-butadiene-styrene (SEEBS), styrene-ethylene-ethylene-propylene-styrene (SEEPS), styrene-isoprene-butadiene (SIBS), and a modified polymer thereof.

4. The thermoplastic resin composition according to claim 1, wherein the olefin elastomer comprises one or more selected from high-density polyethylene (HDPE), low-density polyethylene (LDPE), polypropylene (PP), an ethylene-propylene copolymer (EPM), an ethylene-propylene-diene copolymer (EPDM), an ethylene-butene copolymer, an ethylene-octene copolymer, and a modified polymer thereof.

5. The thermoplastic resin composition according to claim 1, wherein the metal silicate (f) comprises Al, Ca, or a mixture thereof.

6. The thermoplastic resin composition according to claim 1, wherein the metal silicate (f) comprises one or more selected from the group consisting of kaolin, kaolinite, pyrophyllite, mica, feldspar, spodumene, petalite, and wollastonite.

7. The thermoplastic resin composition according to claim 1, wherein the metal silicate (f) is a magnesium-free silicate.

8. The thermoplastic resin composition according to claim 1, wherein the glass fiber (g) has an average particle diameter of 3 to 25 µm and an average length of 1 to 10 mm.

9. The thermoplastic resin composition according to claim 1, wherein the flame retardant (h) comprises one or more selected from the group consisting of a melamine-based flame retardant, a phosphazene-based flame retardant, and a phosphate-based flame retardant.

10. The thermoplastic resin composition according to claim 1, wherein, when applying a 1300 °C flame formed with oxygen and propane gases to a 150 mm × 150 mm × 3 mm specimen according to torch-and-grit evaluation of UL 2596 and measuring flame endurance time until a hole or drip is formed, the thermoplastic resin composition has a flame endurance time of 600 seconds or more.

11. The thermoplastic resin composition according to claim 1, wherein, when a comparative tracking index (CTI) is measured using a 3 mm thick specimen according to IEC 60112, the thermoplastic resin composition is classified as grade 1 or higher by performance level category (PLC) classification.

12. A method of preparing a thermoplastic resin composition, comprising kneading and extruding 15.5 to 26 % by weight of a polyamide resin (a), 9.5 to 17 % by weight of a poly(arylene ether) resin (b), 2 to 5.5 % by weight of a modified poly(arylene ether) resin (c), 0.5 to 4.5 % by weight of one or more (d) selected from the group consisting of an aromatic vinyl elastomer and an olefin elastomer, 5.5 to 12.5 % by weight of a metal phosphorus flame retardant (e), 6.5 to 20.5 % by weight of a metal silicate (f), 15.5 to 38.5 % by weight of glass fiber (g), and 4.5 to 10 % by weight of a flame retardant (h),
wherein the kneading and extrusion are performed using an extruder with nine or more kneading blocks.

13. A flame retardant composition comprising a metal phosphorus flame retardant, a metal silicate, glass fiber, and a flame retardant.

14. The flame retardant composition according to claim 13, wherein, based on a total weight of the flame retardant composition, the flame retardant composition comprises 8.5 to 21.3 % by weight of the metal phosphorus flame retardant, 11.5 to 40 % by weight of the metal silicate, 27 to 56 % by weight of the glass fiber, and 6.5 to 17 % by weight of the flame retardant.

15. A molded article comprising the thermoplastic resin composition according to any one of claims 1 to 11.
